# EUROPEAN PATENT SPECIFICATION

(11) **EP 3 993 178 B1**
(45) Date of publication and mention of the grant of the patent: **24.01.2024**
(21) Application number: 20204127.3
(22) Date of filing: 27.10.2020
(51) Int. Cl.: H01R 13/58, H01R 24/54, H01R 13/52, H01R 35/02, H01R 13/74

(54) **ELECTRICAL PLUG WITH FRICTION BRAKE DEVICE, AS WELL AS ARRANGEMENT AND METHOD**
ELEKTRISCHER STECKER MIT REIBUNGSBREMSVORRICHTUNG SOWIE ANORDNUNG UND VERFAHREN
PRISE ÉLECTRIQUE AVEC DISPOSITIF DE FREINAGE À FRICTION, AINSI QU'AGENCEMENT ET PROCÉDÉ

(43) Date of publication of application: 04.05.2022
(73) Proprietor: TE Connectivity Industrial GmbH, 94559 Niederwinkling (DE)
(72) Inventor: MONCHER, Philipp, 94559 Niederwinkling (DE); ACHATZ, Sebastian, 94559 Niederwinkling (DE); HARTL, Florian, 94559 Niederwinkling (DE)
(74) Representative: Hofstetter, Schurack & Partner

(56) References cited:
- EP-A2- 1 465 293
- DE-U1-202013 012 278
- DE-U1-202013 104 759

## Description

One aspect of the invention relates to an electrical plug for connecting to a housing part of an electric motor. The electrical plug comprises a plug housing. This plug housing comprises a first plug housing section. The first plug housing section has a longitudinal axis.

Electrical plugs are known in the most varied designs and for the most different application areas.

EP 1 465 293 A2 discloses an electrical plug comprising a holding ring arranged on an outer side of a housing part.

In particular in this connection also plugs are known which can be connected to a housing of an electric motor. In this connection also electrical angle plugs are known. This is for instance known from the EP 3 089 284 A1.

This electrical angle plug comprises a plug housing with a first plug housing section. This first plug housing section is axially inserted into a flange sleeve associated with the electrical angle plug. For retaining the plug housing on the flange sleeve several components are provided. Amongst others, in this connection an axial holding device is provided, which retains the plug housing in the direction of the longitudinal axis of the first plug housing section in the flange sleeve. For avoiding a rotational movement between the first plug housing of the electrical angle plug and the flange sleeve of this electrical angle plug a gear tooth system is provided. A rotational movement of the plug housing relative to the then coupled flange sleeve should there be intentionally prevented.

The electrical angle plug used there with its flange sleeve is intentionally provided so that this flange sleeve can be fastened fixed in place on an outer face of a housing part of a housing of an electric motor. In this regard a screw connection is provided. It is thus prevented that the flange sleeve and thus also the complete electrical plug can be rotated relative to the housing part.

In the case of modern applications a raised flexibility of the use of electrical plugs is desired. In particular in this regard also the handling and the accessibility of such electrical plugs also in the mounted state on a housing of the electric motor is to be designed more variably.

It is the object of the present invention to provide an electrical plug, in the case of which the positioning on a housing of an electric motor is facilitated to be more variable and still a reliable retaining is achieved. Correspondingly it is also the object to create an arrangement comprising such an electrical plug and a housing part of a housing of an electric motor. Moreover it is also the object to provide a corresponding method for mounting an electrical plug on a housing part of a housing of an electric motor.

These tasks are solved by an electrical plug, an arrangement, and a method according to the independent claims.

One aspect of the invention relates to an electrical plug. This electrical plug is in particular configured for connecting to a housing part of a housing of an electric motor. The electrical plug comprises a plug housing. This plug housing comprises a first tube-like plug housing section. The first plug housing section has a longitudinal axis. This first plug housing section intentionally is configured for insertion into a plug socket of the housing part. Thus, intentionally the first plug housing section can be directly coupled with the housing part. It is thus intentionally configured to be retained in the plug socket of the housing part. The electrical plug comprises a friction brake device. The friction brake device comprises a friction brake part. The friction brake part is arranged on an outer face of the first plug housing section. The friction brake part, viewed on the outer face radially to the longitudinal axis, is arranged to be exposed towards the outside on this outer face. By the friction brake device a friction braking acting in an azimuthally defined way around the longitudinal axis of the first plug housing section with a preset defined torque threshold value for the electrical plug is generated.

In particular when this electrical plug with its first plug housing section is arranged in the plug socket of the housing part, this friction brake function is generated. It is generated in such a way that only in the case of the preset defined torque threshold value being exceeded an intentionally provided rotational movement of the electrical plug relative to the housing is possible.

This means an electrical plug is provided that can be mounted in a specific way on a housing part of an electric motor. By this electrical plug it is now facilitated that, on the one hand, a stable mechanical holding on the plug socket is achieved, and, on the other hand, an intended and desired rotational movement option of the electrical plug relative to the housing part around the longitudinal axis of the first plug housing section is achieved, if the electrical plug is already mounted on the housing part. Thus, the electrical plug also in the mounted state can be oriented in different azimuthal rotational positions relative to the housing part. The electrical plug thus is devised to the effect that it can be rotated in a defined way on the housing part as intended and desired. In order not to allow for a random rotational movement or possibly a rotational movement of the electrical plug occurring by itself, this friction brake device is provided. Thereby, a rotation of the electrical plug around the longitudinal axis is prevented from occurring by itself. By the preset defined torque threshold value such rotational movement of the electrical plug is facilitated only if a rotary force larger than the torque threshold value is exerted upon the electrical plug. Thus, not only a manifold and more variable use of the electrical plug for mounting on such housing part is facilitated, but it is also achieved that here manifold rotational positions of the electrical plug can be adjusted when it is already mounted on the housing part. The friction brake device in one embodiment also prevents that even in the case of vibrations occurring during operation of the electric motor, which may act upon the electrical plug, no rotational movement of the electrical plug around the longitudinal axis of the first plug housing section occurs by itself. Thus, the friction brake device is generated in a very defined way in order to take into account the named aspects.

The friction brake part and thus also the friction brake device is a component that is different from the seal. Intentionally, thus this friction brake part and thus the entire friction brake device is not configured as sealing device. Due to such friction brake device on a friction brake part thus a sealing element is not provided, which intentionally and primarily is provided for sealing the interface. The friction brake device is not a thread.

The friction brake device intentionally is configured such that it develops and unfolds the provided functionality when mounting the electrical plug on the housing part. In particular by this assembling of the electrical plug and the housing part the friction brake function is realized as intended and desired. Also in this regard a difference from a sealing element is made. A sealing element by such generating of a mechanical connection between the electrical plug and the housing part can be destroyed during assembling. Thus, the sealing function would no longer be given and, on the other hand, also the function of a friction brake not be achieved. In this connection thus a sealing element is not suitable for a friction brake device.

In an embodiment the plug housing sections are made from metal.

In an embodiment the friction brake device is configured for direct mechanical contacting of the plug socket. In particular it is envisaged that the radially exposed friction brake part is configured for direct mechanical contacting of a bounding wall of the plug socket. In particular, this friction brake part is configured for pressing in the plug socket. In an embodiment the friction brake part is dimensioned in the radial direction relative to the longitudinal axis of the first plug housing section in such a way that in the mounted state in the plug socket it is pressed by a radial pressing force into contact with the bounding wall of the plug socket. By this radial pressing force then the preset defined torque threshold value is generated.

The friction brake part is devised in such a way that upon being pressed in the plug socket it is intentionally plastically deformed and/or sheared off. In particular an outer face, in particular at least local portions of the outer face, of the friction brake part is configured for plastic deformation during such compression in order to generate the radial pressing-into-contact force and thus generating the torque threshold value.

The friction brake part on an outer face has several discrete radial elevations. These are arranged spaced apart from each other in circumferential direction around the longitudinal axis. By these elevations local and discrete as well as individual contact points with the bounding wall of the plug socket are facilitated.

The friction brake device comprises as friction brake part a friction brake ring section. This friction brake ring section is a component that is separate from the first plug housing section. The friction brake ring section is configured to be in particular formed as a single piece. The friction brake ring section is mounted to be rotatable in circumferential direction around the longitudinal axis of the first plug housing section on the outer face of the first plug housing section. In particular the friction brake ring section in this regard is mounted on the outer face to be endlessly rotatable. Such separate component in this regard can be manufactured in a simple way and with a more precise shape. Thus, the friction brake device can be designed very individually and precise. Moreover, by this separate component and the endlessly rotatable mounting on the outer face a particularly advantageous concept is realized. This is because, on the one hand, the pressing of the electrical plug in the plug section is simplified. On the other hand, the manufacturing of the first plug housing section is simpler if this friction brake ring section is not integrated and needs to be manufactured integrally formed with it. This separated component design with the endlessly rotatable mounting of the friction brake ring section on the outer face is particularly advantageous also for the desired rotational movement option of the electrical plug relative to the plug socket. This is because, thus, the possibility is provided that upon mounting the electrical plug on the plug socket the friction brake ring section can be individually formed and this is also effected independently of the first plug housing section. This first plug housing section should not deform during mounting on the plug socket. It is in this regard formed from a different material than the friction brake ring section. By this difference in material the friction brake device can be mechanically and functionally improved. In this connection the plug housing of the electrical plug can for instance be configured as die-cast component. For instance here a zinc die-cast component may be realized. The friction brake ring section, by contrast, may be configured to be made from steel. In particular, in one embodiment stainless steel is provided. For instance this may be the stainless steel 1.4310.

An outer face of the friction brake ring section is uneven. The outer face is the radially outer surface of the friction brake ring section. The outer face of the friction brake ring section is the one which in the mounted state of the electrical plug in the plug socket directly contacts an inner wall or a bounding wall of the plug socket. By this uneven design of this outer face it is achieved in particularly advantageous way that in the azimuthal direction this friction brake ring section in each case is intentionally configured locally for the mechanical contacting of the bounding wall of the plug socket. By this unevenness the friction brake ring section is formed in such a way on the outer face that in at least two different azimuthal positions different radii are formed. Thus, in a particularly advantageous way, on the one hand, the pressing of the friction brake ring section in the plug socket can be achieved. In particular, thus, the friction brake functionality can be generated in a particularly advantageous and permanently maintainable way. The friction brake ring section can also be referred to as tolerance ring. In this regard a corresponding tolerance compensation in the radial direction may be provided, which generates and maintains the friction brake functionality in a defined way.

On the outer face of the friction brake ring section several separate radial friction elements are configured. These are configured for radially pressing the bounding wall of the plug socket into contact. Thereby then the friction brake functionality is generated. The radial friction elements are the above-named radial elevations.

In an embodiment the first plug housing section which intentionally is provided for insertion into the plug socket comprises an insertion portion which is inserted into this plug socket during mounting on the housing part. On this insertion portion the friction brake part is arranged. Viewed in the direction of the longitudinal axis of the first plug housing section, in particular the insertion portion, the friction brake part is that component which projects farthest outward perpendicularly to the longitudinal axis. This relates to the comparison of those components in the insertion portion, which are rigid in shape and/or not elastically deformable in themselves. By contrast, for instance an elastic seal in the unmounted state of the plug may project further outward than the friction brake part.

Preferably, the friction brake ring section is preferably configured to be made from metal.

By the rotary movement possibility it is then also achieved in the mounted state that a rotating of the first plug housing section relative to this friction brake ring section and thus also from the housing part is produced. Additionally or instead, it is also possible that the friction brake ring section upon rotating of the electrical plug is rotated along with it in the plug socket. The friction brake ring section in this connection then also rotates relative to the plug section, if an azimuthal force is generated, which causes the exceeding of the preset defined torque threshold value.

In an embodiment the friction brake ring section comprises a surface which is positioned radially inward. This inner surface faces towards the outer face of the plug housing section. This inner surface is smooth. It is a ring wall, the height of which is oriented in parallel to the longitudinal axis of the first plug housing section. In particular this ring wall with its entire height is oriented in parallel to this longitudinal axis.

The outer face of the first plug housing section has a contact surface. This contact surface intentionally is configured for contacting the inner surface of the friction brake ring section. In particular it is envisaged that this contact surface has a height which is larger than the height of the inner surface of the friction brake ring section. In particular this height, which is dimensioned in the direction of the longitudinal axis of the first plug housing section, is larger than 100 percent and smaller than 120 percent, in particular 110 percent of the height of the inner surface of the friction brake ring section. In particular this contact surface, viewed over its entire height, is oriented in parallel to the longitudinal axis of the first plug housing section. Thus, in particular in the mounted state of the electrical plug on the plug socket a contacting of the complete surface of the inner surface of the friction brake ring section on the contact surface of the outer face of the first plug housing section is achieved. In an embodiment the inner surface of the friction brake ring section is smooth.

In one embodiment the contact surface on the outer face of the first plug housing section is smooth.

The contact surface and the inner surface may also be oriented not in parallel to the longitudinal axis, but in parallel to each other. Thereby a conical shape is produced.

In one embodiment on the outer surface of the first plug housing section a groove is formed. In this groove the friction brake ring section is arranged. By the groove the friction brake ring section is arranged axially secured in the direction of the longitudinal axis on the first plug housing section. The groove comprises the above-named contact surface as bottom wall. Viewed in the cross section, this contact surface is configured to be rectilinear over its entire height. In particular also the inner surface of the friction brake ring section, viewed in the cross section, is configured to be rectilinear over its entire height.

By such bearing of the friction brake ring section on the outer face an undesired axial shifting upon pressing the first plug housing section into the plug socket can be prevented. Since here, too, relatively large pressing forces are acting and the friction brake device is of a defined configuration, the friction brake ring section should be maintained in its axial position. The groove mentioned in this regard facilitates this in a particularly advantageous way.

In one embodiment the friction brake ring section extends across an angle of between 300° and 355° around the longitudinal axis of the first plug housing section. In one embodiment the friction brake ring section is not completely closed in the circumferential direction around this longitudinal axis. This is a particularly advantageous embodiment. This is because thus the friction brake ring section is advantageously mounted on the outer face. This is because thus, on the one hand, it can move advantageously azimuthally relative to the outer face. Particularly advantageous, however, is this section geometry also to the effect that a radial deformability is facilitated. This is particularly advantageous upon pressing the first plug housing section with this friction brake ring section into the plug socket. Upon this press-fitting thus the friction brake ring section can be radially reduced. Thus, a particularly advantageous press-fitting and advantageous generating of the friction brake function is provided. In one embodiment this angle is between 300° and 345°.

In an embodiment the friction brake ring section is configured to be radially elastically resilient. In particular this is formed by the non-closed ring geometry. This radial resilience is therefore to be viewed with regard to the friction brake ring section as a whole. The material of the friction brake ring section in an embodiment is not elastically compressible in itself. The wall thickness of the friction brake ring section consequently is not elastically compressible. This means that the wall thickness dimensioned between the inner surface and the outer face, on which the unevenness is formed, is not elastically compressible. This applies to all azimuthal portions of the friction brake ring section. The friction brake ring section is in particular not formed from an elastomer.

By this unevenness of the outer face the friction brake ring section intentionally contacts the bounding wall of the plug socket in the mounted state only in specific local portions directly, wherein this is viewed in the azimuthal direction around the longitudinal axis of the first plug housing section.

Thus, the defined radial pressing force between the friction brake ring section and the inner wall of the plug socket is effected only in these azimuthally defined local portions of the outer face, which represent radial elevations. In the further azimuthal portions of the outer face then also in the mounted state of the electrical plug in the plug socket no contact with the bounding wall of the plug socket is formed.

It may be envisaged that these radial elevations or radial friction elements on the outer face of the friction brake ring section are intentionally configured for plastic deformation upon pressing the electrical plug in the plug socket. It may then be envisaged that only these radial elevations deform plastically. In one further embodiment it is envisaged that in the process of this pressing in the bounding wall recesses are generated by these radial elevations on the outer face of the friction brake ring section. Thus, then in the pressed state an elevation-recess structure is provided. Thus, upon rotating the electrical plug in the plug socket also a haptic perception of the adjustment levels can be achieved. This is then the case when a radial elevation on the outer face of the friction brake ring section from a recess produced in particular by crenation in the bounding wall of the plug socket snaps into engagement with the azimuthally adjacent recess in the bounding wall. These recesses are thus formed also in the radial direction in the bounding wall of the plug socket.

In one embodiment the friction brake ring section is configured as a single piece. In one embodiment, as this has already been mentioned above, it is configured to be made from metal, in particular stainless steel. In one embodiment by the friction brake device a defined torque threshold value of between 1 Nm and 20Nm is predefined. These threshold values may be predefined depending on a plug type of an electrical plug. Plug types can for instance be M12 plugs or M15 plugs or M17 plugs or M23 plugs or M40 plugs. Preferably the torque threshold value in an M12 plug is predefined to be between 1Nm and 4Nm. In the case of an M15 plug the torque threshold value preferably is predefined to be between 3Nm and 8Nm. In an M17 plug the torque threshold value is preferably predefined to be between 4Nm and 9Nm. In the case of an M23 plug the torque threshold value is preferably predefined to be between 3Nm and 8Nm. In the case of an M15 plug the torque threshold value is preferably predefined to be between 8Nm and 18Nm. By the M value designations the thread dimensions of a coupling thread of a coupling portion of the electrical plug are designated in millimeters. The coupling portion for instance is provided for coupling to another plug. In particular due to different weights of the plug types and/or due to different forces, which the plug types have to tolerate, the different torque intervals are advantageous. Thereby each plug type can be permanently used in a highly functional way.

These very defined torque threshold values are particularly advantageous. On the one hand, they securely and reliably facilitate that the plug also in the mounted state in the plug socket does not rotate around the longitudinal axis of the first plug housing by itself in an undesired way. On the other hand, this torque threshold value is not large enough for the electrical plug in the mounted state to be incapable of being rotated manually by an service technician around the longitudinal axis.

In an embodiment the plug housing comprises a rotation stop device. By this rotation stop device a rotation angle of the electrical plug around the longitudinal axis is limited. This also means that in particular in the mounted state of the electrical plug by this rotation stop device it is prevented that a rotation of an undesired rotation angle can be set. The rotation stop device thus represents an end stop. In particular the rotation angle of the plug by this rotation stop device is limited to a value smaller than 360°. In one embodiment by this rotation stop device a rotation angle of between 310° and 340°, in particular of between 320° and 330°, is facilitated. It may be envisaged that starting from a mounting position between the electrical plug and the housing part an angle of up to a maximum of 225° around the longitudinal axis is facilitated and in the opposite direction around the longitudinal axis starting from this named basic state the rotation by a rotation angle of a maximum of 105° is facilitated.

Generally, by the electrical plug according to the above-named aspect or an advantageous embodiment it is also achieved that a flange sleeve, as it is present in the prior art according to the EP 3 089 284 A1, is no longer required.

By this electrical plug thus the first plug housing section can be directly inserted into the plug socket. This is not envisaged and not possible in the prior art, since the set out flange sleeve does not extend into a plug socket in a housing part, but rather is screwed thereto on the outer face of the housing part. In the case of the electrical plug according to the invention thus also intentionally an inserting of a partial portion of the first plug housing section into the plug socket is envisaged. The plug socket and the first plug housing section thus, viewed in the direction of the longitudinal axis of the first plug housing section, are arranged to be overlapping each other in the mounted state.

In an embodiment the electrical plug comprises an axial holding device. By the axial holding device an axial position in the direction of the longitudinal axis of the first plug housing section is capable of being fixed to the housing part. The axial holding device is a device that is separate from the friction brake device. The axial holding device is secured in position by this axial position. An axial shifting of the electrical plug relative to the plug socket in the mounted state is then no longer possible. The friction brake device in principle also already provides an axial retaining of the electrical plug in the plug socket. However, it is not configured for fixing and securing a defined axial position of the electrical plug in the plug socket. By a corresponding exertion of force the electrical plug can be moved without the axial holding device only with the friction brake device in the axial direction of the plug socket. Even though this would a relatively large exertion of force, it would be possible. In order to avoid this, in one advantageous embodiment this axial holding device is provided for fixing and securing in position.

In principle, however, also the electrical plug could be configured without this axial holding device. Then the friction brake device would be configured both for the friction brake functionality as well as for the axial holding. A double functionality would then be accomplished. In particular by the friction brake device a defined axial holding force of larger than or equal to 5 Nm, in particular larger than or equal to 10 Nm, is configured in a defined way.

In an embodiment the axial holding device comprises a separate securing ring or a securing ring section.

In an embodiment this securing ring is a circumferentially closed ring. In an embodiment the securing ring comprises securing teeth, which are arranged on a base ring of said securing ring. Said securing teeth are arranged inclined to the horizontal plane and are orientated radially to the outside. So the securing teeth crawls in the inner wall of the plug socket when the mounted end position is installed. They can be named crawling teeth. Further in an embodiment the securing ring comprises retaining teeth. The retaining teeth are arranged on the base ring. The retaining teeth are orientated to the other side from the base ring in comparison to the crawling teeth in the direction of the axis of the first plug housing section. The retaining teeth are retained axially on a bar bounding the nut configured on the first plug housing section. In an embodiment the securing ring is a single piece ring. In a further embodiment the securing ring comprises two separate rings. A first ring comprises a base ring and the integrated crawl teeth. A second ring comprises a base ring and the integrated retaining teeth. In the mounted state the two base rings are arranged directly at each other.

In a further embodiment the securing ring is a securing ring section. Then it is not a closed ring.

In an embodiment the securing ring is arranged on an outer face of the first plug housing section. The outer face of the first plug housing section preferably has a groove, in which the securing ring is arranged. Thus, an axial securing in position of the securing ring on the first plug housing section is facilitated. The securing ring, viewed in the radial direction relative to the longitudinal axis, is projecting beyond the outer face of the first plug housing section. Thereby also a snap element is formed. In particular it is envisaged that upon axial assembling of the electrical plug and the housing part the securing ring snaps into engagement behind a counter-snap element. Then the securing of the electrical plug in position in the plug socket provided in the axial direction is accomplished.

In an embodiment the first plug housing has a first, free end. This free end is the first to plunge in the plug socket upon being assembled with the plug socket. This first end is bounded by a radial bulge. This bulge is preferably fully circumferentially extending. It is circumferentially closed in this regard. The bulge preferably has an insertion inclination. Same is conically shaped. Thus, the insertion of the first plug housing section into the plug socket can be effected in a simple way. A clamping or strutting or tilting is thereby avoided in an improved way. At the same time this bar or this bulge or this collar, respectively, forms a bounding of the groove, in which the securing ring is arranged. Viewed in the direction of the longitudinal axis, starting from this first end of the first plug housing section in the named order first the securing ring and subsequently the friction brake ring section is arranged. In the direction of the longitudinal axis the friction brake ring section and the securing ring are arranged relative to each other without overlapping. In particular they are mounted each in separate grooves formed on the outer face of the first plug housing section. In one embodiment, viewed in the direction of this longitudinal axis, in series to this friction brake ring section a sealing element or a seal is arranged, which in turn is separate therefrom. This sealing element may for instance be an O-ring. In one embodiment same may be arranged in a separate groove that is formed on the outer face of the first plug housing section. In particular these named grooves directly subsequently are each separated by a bounding bar of a groove. The sealing element is configured as a circumferentially closed ring. It is in particular configured to be made from elastomer.

One further aspect of the invention relates to an arrangement comprising an electrical plug according to the above-named aspect or an advantageous embodiment thereof. The arrangement moreover comprises a housing part of a housing for an electric motor. The first plug housing section is inserted into the plug socket in the housing part. By the friction brake device a defined torque threshold value is predetermined so that an intentionally envisaged rotational movement of the plugaround the longitudinal axis of the first plug housing section, whilst remaining at the same axial level and only upon exceeding the torque threshold value, is facilitated.

In this connection it also to be mentioned in general that the friction brake device has no thread or is no thread. In the case of this provided rotational movement possibility of the electrical plug in the housing part upon any rotation the electrical plug remains in the same axial position viewed along the longitudinal axis of the first plug housing section. In the case of a thread this would not be the case since here invariably also an axial movement occurs. The friction brake device thus is configured to be threadless.

In an embodiment it is envisaged that the electrical plug is retained in fixed axial position in particular only by an axial holding device that is separate from the friction brake device and comprises a securing ring section. The securing ring section in the mounted state engages behind a radial step of the plug socket. In an alternative embodiment the axial holding device comprises a securing bracket, which is arranged on the plug socket and radially engages in an engagement recess in the first plug housing section. In this alternative embodiment the separate securing bracket is not a circumferentially closed ring. It may be configured as securing clamp. In this embodiment the housing part comprises an insertion socket, into which this securing bracket can be inserted. In this embodiment thus first the electrical plug is axially inserted into the plug socket until it has reached its axial end position. Only subsequently then the securing bracket, which is separate therefrom, is pushed into this insertion opening or into this insertion slot in the housing part. In the mounted final state of the securing bracket same radially engages by reaching inward into corresponding grip grooves in the first plug housing section. Thereby, also in turn the axial securing of the electrical plug in position on the housing part is achieved. The securing bracket in this connection may comprise individually formed bracket arms correspondingly engaging the engagement grooves in the first plug housing section in the radial direction. The securing bracket, however, for instance may also comprise an axially snapping snap element, which snaps into engagement with a counter snap element on the first plug housing section. Also thereby then the axial securing in position is achieved.

In contrast to the alternative embodiment, if a securing ring is present, it is envisaged that same is mounted on the first plug housing section and only then the electrical plug is inserted into the plug socket.

A further aspect of the invention relates to a method for mounting an electrical plug, in particular according to the above-named aspect or an advantageous embodiment thereof. This electrical plug is mounted on a housing part of a housing for an electric motor. In this process the following steps are performed:
- manufacturing a plug socket in the housing part for receiving a first plug housing section of the electrical plug;
- attaching a friction brake part to the outer face of the first plug housing section for generating a friction brake device on the outer face of the first plug housing section,
- inserting the first plug housing section with the friction brake device into the plug socket, in particular only along a linear assembling direction, which is oriented parallel or coaxially to the longitudinal axis of the first plug housing section;
- automatic generating of a radial pressing force of the friction brake device on the inner surface of the plug socket whilst directly contacting the inner surface by the, in comparison with the inner dimension of the plug socket, radially larger friction brake part and thereby caused defined generating of a torque threshold value for rotating the electrical plug relative to the housing part in the mounted final state of the electrical plug on the housing part;
- reaching an axial end position of the first plug housing section in the plug socket;
- Especially securing the axial end position, reached, in particular only by an axial insertion, by an axial holding device of the arrangement.

The axial holding device may be formed by the friction brake device itself or by an axial holding device that is separate therefrom.

Advantageous embodiments of the plug and/or the arrangement are to be regarded as advantageous embodiments of the method, wherein for this purpose the individual components of the plug and/or the arrangement alone or in at least partial operative connection facilitate the method steps during mounting as well as during possibly following rotating of the plug relative to housing part. With the indications "top", "bottom", "front", "rear, "horizontal", "vertical", "depth direction", "width direction", "height direction" the positions and orientations given in the case of intended use and intended arrangement of the plug are indicated.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or taken alone without departing from the scope of the invention. Thus, implementations are also to be considered as encompassed and disclosed by the invention, which are not explicitly shown in the figures and explained, but arise from and can be generated by the separated feature combinations from the explained implementations.

Embodiments of the invention are explained in more detail in the following by reference to schematic drawings. These show in:
- Fig. 1: an exploded view of an embodiment of an electrical plug according to the invention;
- Fig. 2: a side view of the embodiment of an arrangement according to the invention with an electrical plug according to Fig. 1 in the assembled state and a partial portion of the housing part of a housing for an electric motor;
- Fig. 3: the housing part of the electric motor in perspective representation according to an embodiment;
- Fig. 4: a side view of the arrangement according to Fig. 2, wherein in Fig. 4 the electrical plug in the housing part is shown in the mounted final state;
- Fig. 5: a sectional view through the arrangement according to Fig. 4;
- Fig. 6: a further embodiment of a securing ring section of an axial holding device in perspective representation;
- Fig. 7: a sectional view through a further embodiment of an arrangement, in which the securing ring section according to Fig. 6 is mounted on the electrical plug;
- Fig. 8: a perspective view of a further embodiment of a securing ring section;
- Fig. 9: a perspective view of an embodiment of an arrangement, in which in contrast to the hitherto explanations, the axial holding device comprises a safety bracket;
- Fig. 10: the view according to Fig. 9 without the electrical plug;
- Fig. 11: a perspective view of an embodiment of the securing bracket of the axial holding device, as it is mounted in Fig. 9 and Fig. 10;
- Fig. 12: a sectional view through a partial portion of the arrangement according to Fig. 9;
- Fig. 13: a further embodiment of a securing bracket of an axial holding device in perspective representation;
- Fig. 14: a perspective view of an embodiment of an arrangement, in which the safety bracket according to Fig. 16 is mounted;
- Fig. 15: a perspective view of a further embodiment of a housing part with a further embodiment of a securing bracket of an axial holding device;
- Fig. 16: a perspective view of this securing bracket in Fig. 15;
- Fig. 17: a sectional view through an arrangement on a housing part according to Fig. 15 and the securing bracket according to Fig. 16;
- Fig. 18: a side view of a further embodiment of an electrical plug comprising an embodiment of a securing ring;
- Fig. 19: a perceptive view of the securing ring arranged in Fig. 18; and
- Fig. 20: a perspective view of a further embodiment of a securing ring.

In the figures same elements or elements having the same function are equipped with the same reference signs.

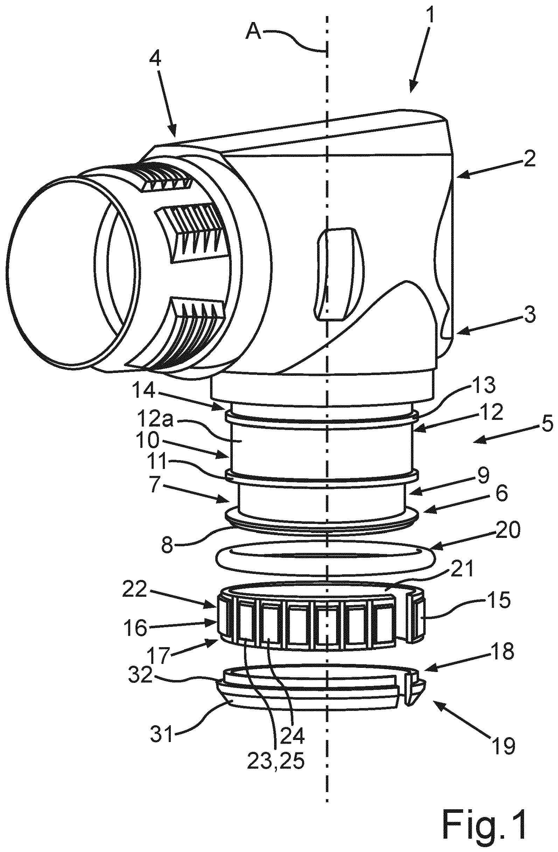

In Fig. 1 in an exploded view an embodiment of an electrical plug 1 is shown. The electrical plug in the embodiment is an angle plug. The electrical plug 1 comprises a plug housing 2. This is configured in particular as a single piece. It is made from die casting. In particular it is made from zinc die casting. The plug housing 2 has a first tube-like plug housing section 3. Same has a longitudinal axis A. Moreover, the plug housing 2 has a second, tube-like plug housing section 4. Same is arranged at an angle, in particular 90°, relative to the first housing section 3.

The first plug housing section 3 intentionally is configured for direct coupling for instance to a housing part of a housing of an electric motor. This housing part of the housing is also designated as bearing shield. The first plug housing section 3 comprises an insertion portion 5. Same is provided for direct inserting into a plug socket of the housing part. The insertion portion 5 has a free end 6. This free end 6 is the one which upon insertion into the plug socket is first to plunge in this hole portion. At the first end 6 a collar 7 is formed. This collar 7 is a radial bar. This means that it forms a bulge perpendicular to the longitudinal axis A. This collar 7 has a conical outer face 8. Thus, the inserting into the plug socket can be effected more simply. At the same time this collar 7 forms a boundary of a groove 9. The groove 9 is formed on an outer face 10 of the first plug housing section 3. In particular this groove 9 is formed on an outer face 10 of the insertion portion 5. This groove 9 is axially bounded by the collar 7, on the one hand, and by a further radial bar 11, on the other hand. This radial bar 11 moreover bounds a further groove 12. This groove 12 is also formed on the outer face 10. The groove 12 moreover is axially bounded in the direction of the longitudinal axis A by a further radial bar 13. This radial bar 13 moreover is bounded by a further groove 14. This groove 14 is also formed on the outer face 10, particular of the insertion portion 5.

The grooves 9, 12, and 14, viewed in the direction of the longitudinal axis A, are thus immediately subsequent to each other and each separated from each other by a common radial bar 11, 13.

The electrical plug 1 in the shown embodiment comprises a friction brake device 15. This friction brake device 15 in the shown embodiment comprises a friction brake part 16. This friction brake part 16 is a component which is separate from the plug housing 2. The friction brake part 16 is configured to be formed as a single piece. In one embodiment it is configured to be made from metal. In one embodiment it is configured to be made from stainless steel. The friction brake part 16 in the shown embodiment is configured as friction brake ring section 17. This means that no circumferentially closed ring is realized. The friction brake ring section 17 extends in the circumferential direction around the longitudinal axis A and thus in the azimuthal direction only across an angle of between 300° and 355°.

This friction brake ring section 17 is provided for being mounted in the groove 12.

Moreover, in the embodiment it is envisaged that the electrical plug 1 separate from the plug housing 2 comprises a securing ring section 18. The securing ring section 18 is formed as a single piece. It is a circumferentially non-closed ring. The securing ring section 18 is integral part of an axial holding device 19. Thereby, the electrical plug 1 can be fixed in its axial position, viewed in the direction of the longitudinal axis A, in the plug socket. The securing in position at this axial level is thereby accomplished. The securing ring section 18 in one embodiment may be made from plastic. However, it may also be made from metal. The securing ring section 18 intentionally is provided for being mounted in the groove 9.

The securing ring section 18 in the mounted state in the groove 9, viewed in the radial direction, is projecting relative to the collar 7 and the radial bar 11. The securing ring section 18 is also configured to comprise a snap element 32. This means that it can snap into engagement behind a counter snap element on the housing part. By this snap-locked state then the axial securing of the electrical plug 1 in position in the plug socket is achieved.

By the design merely as a ring section and not as a fully circumferentially closed ring also a radially elastic deformation of the securing ring section 18 is facilitated.

By the design as friction brake ring section 17 also an elastic deformation in the radial direction of the friction brake part 16 as a whole is facilitated. The material as such of the friction brake ring section 17, however, is not configured to be elastically compressible.

In the embodiment the electrical plug 1 comprises a seal or a sealing element 20, respectively. The sealing element 20 is a component that is separate from the plug housing 2, from the friction brake ring section 17, and from the securing ring section 18. The sealing element 20 is for instance a circumferentially closed ring. It may for instance be an O-ring. In particular this sealing element 20 is made from elastomer.

The sealing element 20 intentionally is provided to be mounted in the groove 14.

As can be discerned already in Fig. 1, this friction brake part 16 in the mounted state on the outer face 10 is arranged to be radially exposed towards the outside.

By the friction brake device 15 a friction braking acting in an azimuthally defined way around the longitudinal axis A with a defined preset torque threshold value is generated by a rotational movement of the electrical plug 1. This then is in particular the case if the electrical plug 1 with its insertion portion 5 is inserted into the plug socket and there is arranged in its end position. Only in case the defined threshold value is exceeded, then an intentionally envisaged rotational movement of the electrical plug 1 relative to the housing part is facilitated.

As shown in Fig. 1, the friction brake ring section 17 comprises a radially inner surface 21. In particular same is smooth. This surface contacts the equally smooth bottom wall 12a of the groove 12. The bottom wall 12a via its height dimensioned in the direction of the longitudinal axis A is oriented in parallel to this longitudinal axis A. Viewed in the direction of this longitudinal axis A, this inner surface 21 is configured to be even. This means that it is rectilinearly oriented in a cross-section, in which the longitudinal axis A in its extension is fully contained, and is oriented in parallel to this longitudinal axis A. The inner surface 21 thus is not configured to be inwardly or outwardly curved.

An outer face 22 of this friction brake ring section 17 is configured to be uneven. This means that in at least two different azimuthal positions, viewed around the longitudinal axis A, the outer face 22 has different radii. In particular this is the case in at least two defined and different azimuthal positions. In the embodiment shown in Fig. 1 in this regard plural radial elevations 23 are formed on this outer face 22. These radial elevations 23 are configured to be separated and equidistant relative to each other in the circumferential direction around the longitudinal axis A. In the embodiment they are of a block-like design. In particular they may be formed in the shape of a truncated pyramid. In another embodiment the radial elevations 23 could be rounded too. In this regard these radial elevations 23 on their outer face have contact surfaces 24, by which a direct mechanical contact with a bounding wall of the plug socket is provided.

By this uneven design of the outer face 22, viewed in the circumferential direction around the longitudinal axis A, in each case only one local mechanical contact of the friction brake ring section 17 with the bounding wall of the plug socket occurs.

These elevations 23 may also be referred to as radial friction elements 25. These are configured for radial pressing on the bounding wall of the plug socket in such a way that the azimuthal friction brake function is generated.

In the mounted state of the friction brake ring section 17 in the groove 12 this friction brake ring section 17 is mounted to be rotatable, in particular endlessly rotatable, around the longitudinal axis A.

By the friction brake device 15 a defined torque threshold value of between 1 Nm and 20 Nm is predetermined. Upon exceeding this defined torque threshold value the electrical plug 1 intentionally can be rotated around the longitudinal axis A on the housing part.

The second plug housing part 4 intentionally is provided for coupling for instance to another electrical plug, which is not shown here.

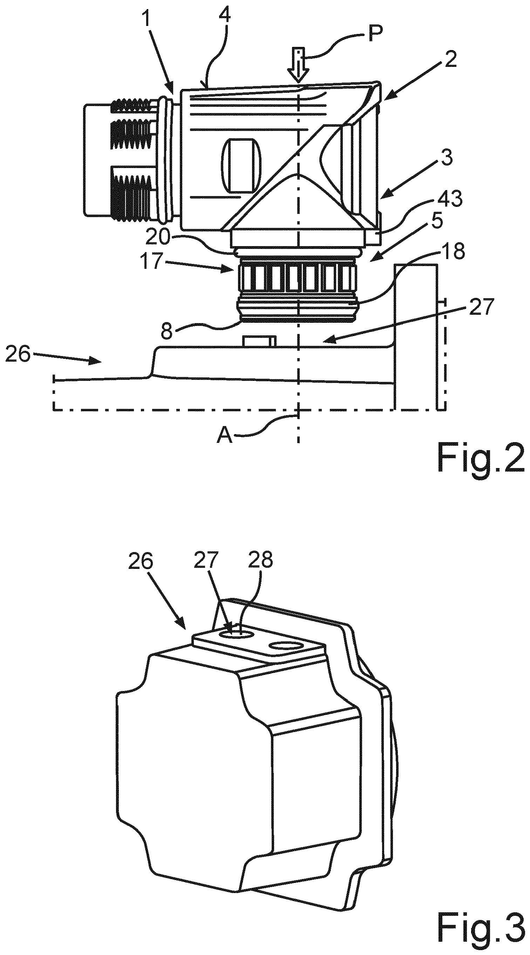

In Fig. 2 a side view of the electrical plug 1 according to Fig. 1 is shown in the assembled state. Respective positions of the securing ring section 18, of the friction brake ring section 17, and of the sealing element 20 can be discerned. Moreover, in Fig. 2 also a partial portion of a housing part 26 is exemplarily shown. This housing part 26 comprises a plug socket 27. This is in particular a bore or a round hole, respectively.

In Fig. 3 in a perspective representation an embodiment of a housing part 26 is shown. A plug socket 27 is equally discernible. A bounding wall 28 of this hole portion is configured to be particularly smooth.

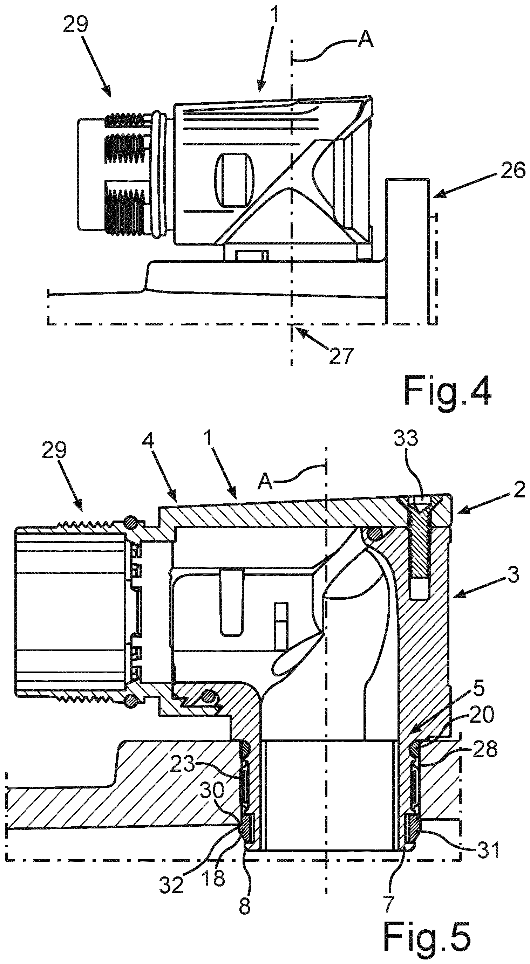

In Fig. 4 in a side view an arrangement 29 is shown. The arrangement 29 in the embodiment comprises an electrical plug 1 according to the representations in Fig. 1 and Fig. 2. Here the mounted final state of the electrical plug 1 on the housing part 26 is shown. It can be discerned that the insertion portion 5 is inserted into the plug socket 27.

As is shown already in Fig. 1 and Fig. 2, the electrical plug 1 is shown with its coupling elements. The electrical plug 1 in this connection also does not comprise any flange sleeve, as it is required in the initially mentioned prior art. In particular the electrical plug 1 is conceived in such a way that it can be inserted into and retained in this plug socket 27 only by a plug connection. For this purpose, it is envisaged during mounting that the electrical plug 1 according to Fig. 2 is inserted linearly into this plug socket 27 along a mounting direction or assembling direction P. To this end, then the insertion portion 5 is pressed into this plug socket 27. Due to this axial insertion pressing force the azimuthal friction brake function is generated. This means that after the plug socket 27, to start with, is generated in the housing part 26 and the housing part 26 is provided, the electrical plug 1, which according to Fig. 2 is completely mounted, is provided and is inserted accordingly. During this inserting the friction brake ring section 17, on the one hand, is also radially compressed and in this regard also in particular plastically deformed at the elevations 23. With the dimensioning of the friction brake ring section 17 during this axial insertion pressing also a radial pressing force of the friction brake ring section 17 on the bounding wall 28 is generated. By this radial pressing force an azimuthal friction brake function is generated. In this regard only the insertion along this linear assembling direction P is effected, which is oriented parallel or coaxially to the longitudinal axis A of the first plug housing section 3.

As already explained in the above, in the process of this assembling also an automatic generating of this radial pressing force of the friction brake device 15 on the inner surface of the plug socket 27 is generated. This inner surface is the bounding wall 28. This is effected upon direct contacting of the friction brake ring section 17 with this inner surface or the bounding wall 28. Since this radially larger friction brake device 15 thus generates this radial pressing force on the bounding wall 28 in a defined way, thereby also automatically an effected defined generating of the desired azimuthal torque threshold value is configured. Thus, also intentionally the rotational movement possibility of the electrical plug 1 on the housing part 26 is formed. Thus, then an optional or situation-specific required rotating of the electrical plug 1 on the housing part 26 relative to the housing part 26 is facilitated.

In Fig. 4 moreover also the end position of the electrical plug 1 in the plug socket 27 reached in the direction of the longitudinal axis A and thus in the axial direction is shown. In this axial end position also an axial securing of this electrical plug 1 is provided. This is facilitated by the axial holding device 19 as explained.

The mounting of the electrical plug 1 on the housing part 26 thus is effected exclusively in the direction of the linear assembly direction P starting from the separated state according to Fig. 2 until the mounted final state is reached in Fig. 4. In this basic mounting process thus no further other mounting movement is necessary. Starting from the mounted final state shown in Fig. 4 then optionally or situation-specifically a rotating of the electrical plug 1 around the longitudinal axis A can be effected. A desired rotation position can be adjusted individually.

In Fig. 5 a vertical sectional view of the arrangement 29 according to Fig. 4 is shown. Here it can be recognized how, on the one hand, the sealing element 20 contacts the bounding wall 28. Moreover, also the radial pressing of the friction brake ring section 17 on the bounding wall 28 can be recognized. In particular, here the surfaces or contact surfaces 24, respectively, are radially pressed on this bounding wall 28. Moreover, it can also be recognized that the securing ring section 18 has radially snapped into engagement behind a bottom edge 30 of the plug socket 27. As can also be recognized in Fig. 5, the securing ring section 18 comprises a conical outer wall section 31. Same is also already shown in Fig. 1. By this inclined orientation also the improved insertion into the plug socket 27 is facilitated. By the step formed in this outer wall section 31 a corresponding offset recess is formed in such a way that also the corresponding snap element 32 in this securing ring section 18 is integrally formed. By this snap element 32 the counter snap element (edge 30) of the plug recess 27 is radially snapped behind into engagement. Thus the securing of the electrical plug 1 in axial position is achieved.

In Fig. 5 it is also shown that the plug housing 2 in an advantageous embodiment is configured to consist of two parts. This means that the first plug housing section 3 and the second plug housing section 4 are separate components. They are here screwed together by a screw 33.

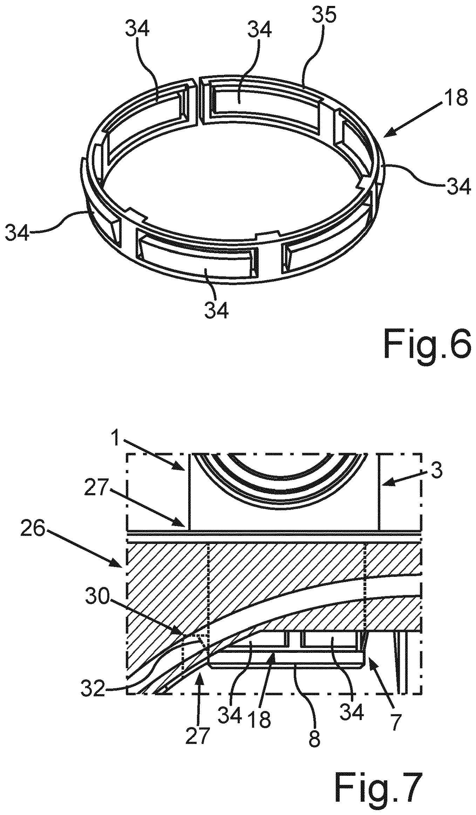

In Fig. 6 in a perspective view a further embodiment of a securing ring section 18 is shown. In contrast to the embodiment according to Fig. 1, here the securing ring 18 is not realized with an uninterrupted design of a snap element 32. Rather, here individual azimuthal sections 34 are formed, which by their inclined position form the snap elements 32.

In Fig. 7 a sectional view of a partial portion of an embodiment of an arrangement 29 is shown. Here the housing part 26 is shown, wherein in the plug socket 27 the electrical plug 1 is arranged already in its end position. In the embodiment shown here the electrical plug 1 comprises as securing ring section 18 that from Fig. 6. In Fig. 7 the snapped state of the snap element 32 in the counter snap element or the edge 30, respectively, is shown in dashed representation. Since in the sectional plane this snapping basically could not be recognized, because one end of the housing part 26 projects, this snapped state is symbolized by dashed representation.

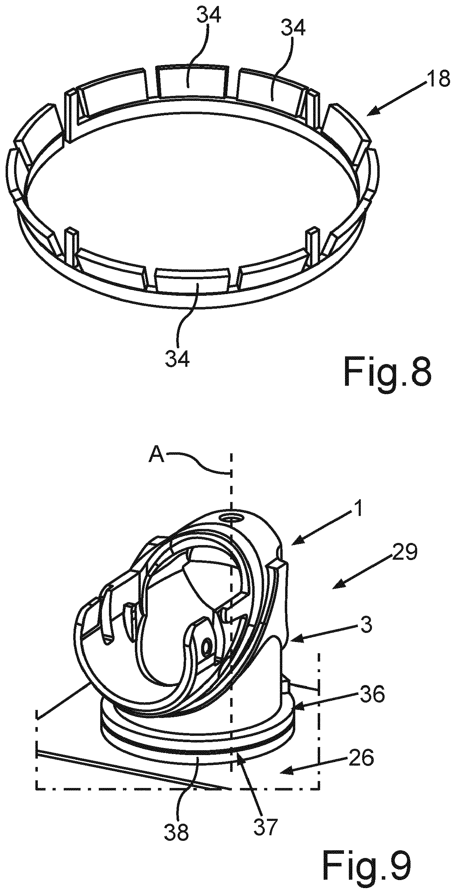

In Fig. 8 a further embodiment for a securing ring section 18 is shown in a perspective representation. In this embodiment a top connection bar 35, as it is shown in Fig. 6, is not present. Moreover, here the number of the elements 34 is larger than in Fig. 6.

In Fig. 9 a further embodiment of an arrangement 29 is shown. Here already the mounted final state of the electrical plug 1 on the housing part 26 is shown. In this embodiment the plug socket 27 has a collar 36 that extends upward. In this collar 36 an insertion slot 37 is formed. Into this insertion slot 37 a securing bracket 38 can be radially pushed. In Fig. 9 this securing bracket 38 is shown in the mounted final state. By this design a further embodiment of an axial holding device 19 is realized. Instead of the securing ring section 18 here the securing bracket 38 is provided.

In the hitherto embodiments according to Fig. 1 to Fig. 8 the securing ring section 18 prior to mounting the electrical plug 1 in the plug socket 27 is already mounted on the first plug housing section 3. In the embodiment in Fig. 9 in contrast thereto, to start with, the electrical plug 1 is mounted in the plug socket 27 until it has reached its axial end position. Not until then, subsequently the securing bracket 38 is pushed into this insertion opening or the insertion slot 37. Only then the axial fixing of the electrical plug 1 in position in the housing part 26 is provided.

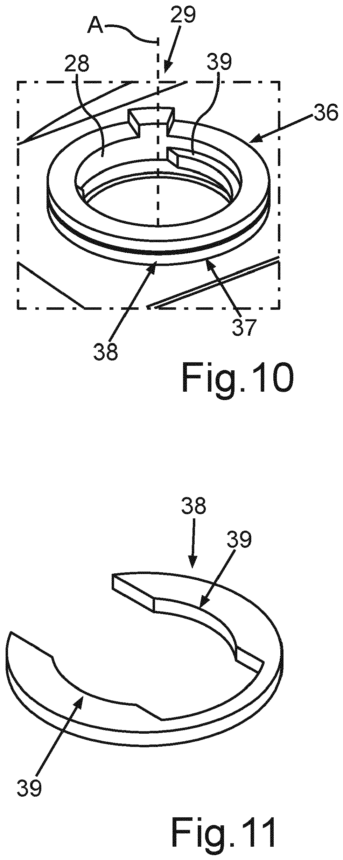

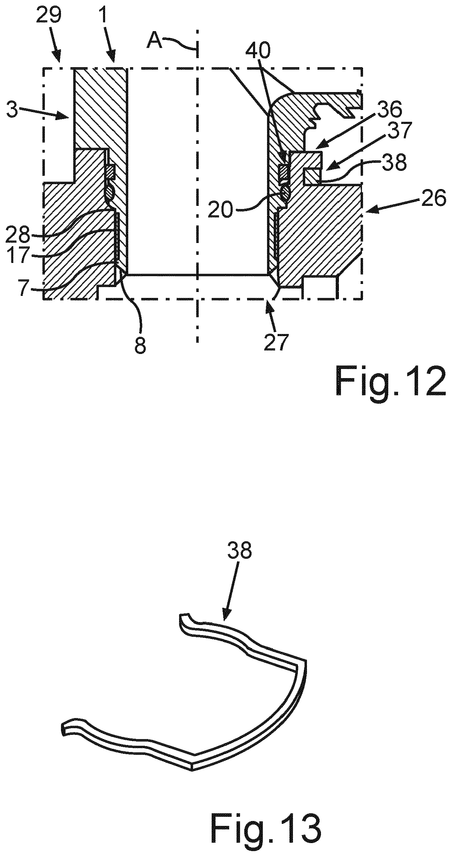

In Fig. 10 in this connection the arrangement 29 without the electrical plug 1 is shown. Here, it can be recognized that the securing bracket 38 relative to the bounding wall 28 radially projects inward, if it is arranged in the mounted final state. Therein, radially inwardly projecting sections 39 of this securing bracket 38 engage into engagement portions 40 (Fig. 12) of the first plug housing section 3. By this radial engagement the axial securing in position is achieved. In Fig. 11 an embodiment of the securing bracket 38 is shown in perspective representation.

In Fig. 12 in a vertical sectional view the arrangement 29 according to Fig. 9 is shown. As can be discerned here, in this embodiment the securing bracket 38 is arranged in axial direction after the sealing element 20. Thus, in comparison with the embodiments according to Fig. 1 to Fig. 8 the end 6 is more distant than the sealing element 20 and the friction brake ring section 17.

In Fig. 13 in a further embodiment an alternative shape design of a securing bracket 38 is shown. This may be advantageously utilized in an arrangement 29 according to Fig. 10 or 12. In this embodiment the elevation or the collar 36, respectively, is not formed as ring, but rather as square pedestal. The insertion slot 37 in this regard is not arranged on a curved outer wall, but rather on a rectilinear wall of this square geometry.

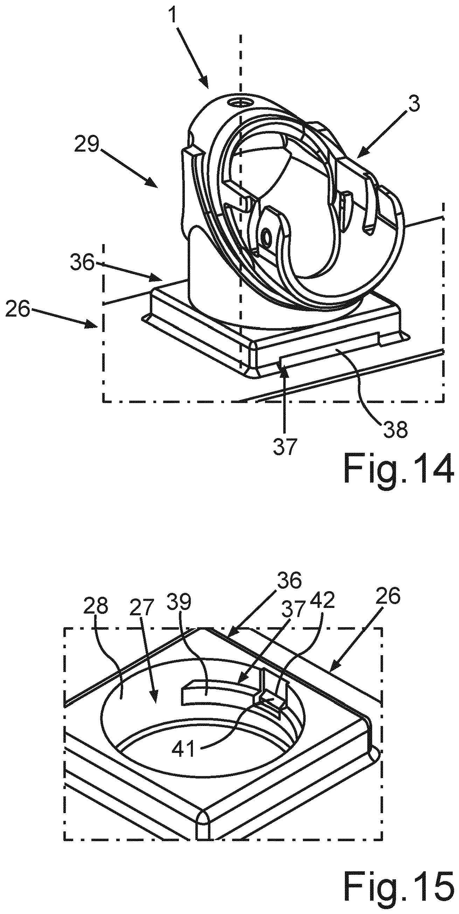

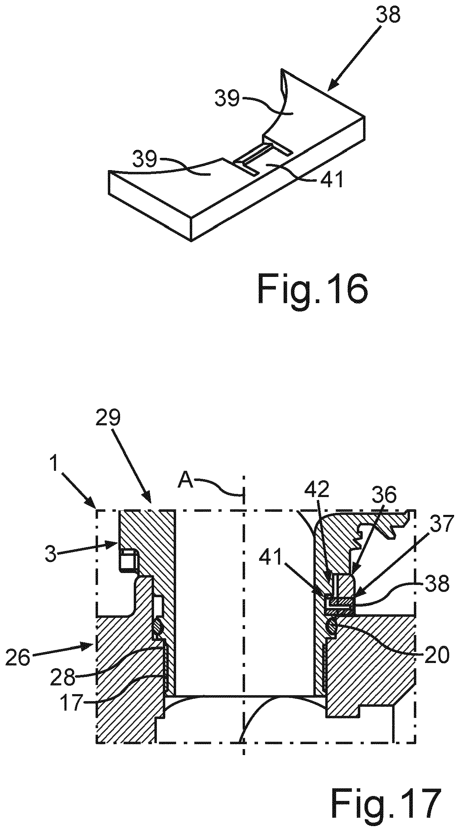

In Fig. 15 a further embodiment in analogy to Fig. 10 is shown. Here the collar 36 according to the embodiment in Fig. 14 is realized. Via the insertion slot 37 here a further embodiment of a securing bracket 38 is inserted. In Fig. 16 the securing bracket 38 is shown in perspective representation.

Here, too, the securing bracket 38, as is also the case in Fig. 11 and Fig. 13, is formed as a single piece. It may be configured to be made from plastic or of metal. In the embodiment in Fig. 16 the securing bracket 38 comprises an integrated snap element 41. Same is configured for axial engagement with a counter snap element 42, as it is shown in Fig. 15. The counter snap element 42 in this regard is an outwardly oriented radial recess in the bounding wall 28.

In Fig. 17 an embodiment of an arrangement 29 is shown in a vertical sectional view. This arrangement 29 comprises an electrical plug 1 as it has been explained for instance also in connection with Fig. 12 and Fig. 9 and Fig. 14. It thus in particular does not comprise an securing ring section 18. As can be recognized in Fig. 17, here the snapped state of the securing bracket 38 on the elevation or the collar 36, respectively, is shown. Thus, this securing bracket 38 cannot slip out from the insertion slot 37 in the radial direction. As can be seen in Fig. 15 and Fig. 16, the securing bracket 38 here, too, comprises radially inwardly projecting engagement portions 39, which are provided for engagement in the engagement portion 40 (Fig. 12). Thereby, too, then by this radial engagement an axial securing of the electrical plug 1 in position on the housing part 26 is achieved.

In particular the electrical plug 1 on the plug housing 2 comprises a rotation stop device 43 (Fig. 2).

In the embodiments above the securing ring 18 is a circumferentially not closed ring. It is a ring section.

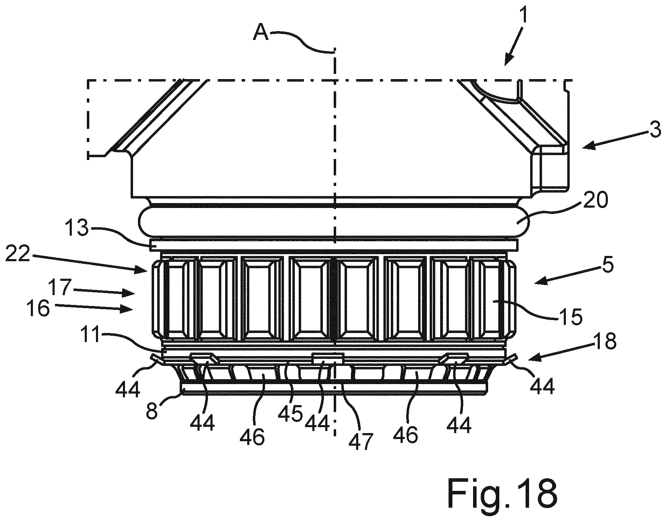

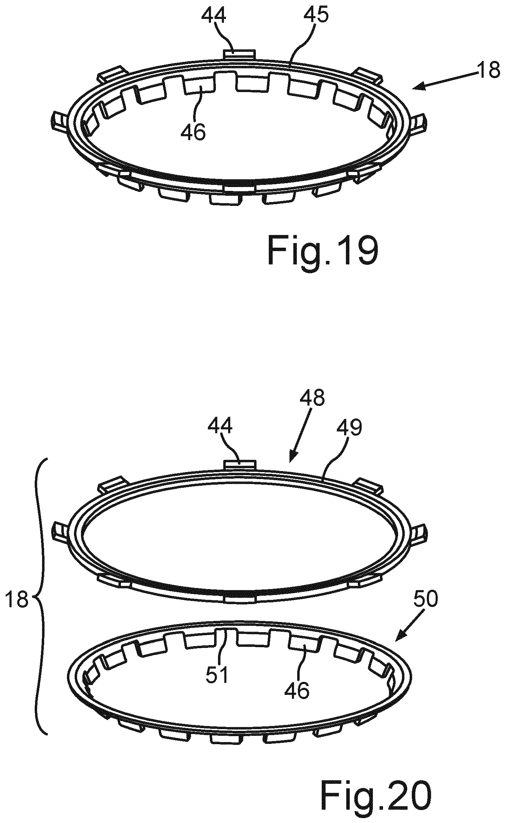

In an embodiment this securing ring 18 is a circumferentially closed ring as it is shown in Fig. 18, 19 and 20. In Fig. 18 the mounted state of the securing ring 18 on the first plug housing section 3 is shown. In an embodiment the securing ring 18 comprises securing teeth 44, which are arranged on a closed base ring 45 of said securing ring 18. Said securing teeth 44 are arranged inclined to the horizontal plane and are orientated radially to the outside. So the securing teeth 44 crawls in the inner wall of the plug socket 27 when the mounted end position is installed. They can be named crawling teeth. By this a force closure at the inner wall of the plug socket 27 and not only form closure is achieved. Further in an embodiment the securing ring 18 comprises retaining teeth 46. The retaining teeth 46 are arranged on the base ring 45. The retaining teeth 46 are orientated to the other side from the base ring 45 in comparison to the crawling teeth 44 in the direction of the axis A of the first plug housing section 3. The retaining teeth 46 are retained axially on a bar 47 bounding the nut 9 configured on the first plug housing section 3. In an embodiment the securing ring 18 is a single piece ring (Fig. 19). In a further embodiment (Fig. 20) the securing ring 18 comprises two separate rings. A first ring 48 comprises a closed base ring 49 and the integrated crawl teeth 44. A second ring 50 comprises a closed base ring 51 and the integrated retaining teeth 46. In the mounted state the two base rings 49, 51 are arranged directly at each other.

## Claims

1. An electrical plug (1) for connecting to a housing part (26), comprising a plug housing (2), which comprises a first plug housing section (3) having a longitudinal axis (A),
wherein the first plug housing section (3) intentionally is configured for insertion into a plug socket (27) of the housing part (26) and the electrical plug (1) comprises a friction brake device (15) comprising a friction brake part (16), wherein said friction brake part (16) is arranged on an outer face (10) of the first plug housing section (3) and said friction brake part (16) is exposed towards the outside in radial direction to the longitudinal axis (A), wherein by the friction brake device (15) a friction braking acting in an azimuthally defined way around the longitudinal axis (A) with a set torque threshold value for the electrical plug (1) is generated
**characterized in that**
the friction brake device (15) comprises a friction brake ring section (17) as friction brake part (16), which is a component that is separate from the first plug housing section (3), wherein the friction brake ring section (17), is mounted to be rotatable on the outer face (10), wherein an outer face (10) of the friction brake ring section (17) is uneven so that in at least two different azimuthal positions of the outer face (10) different radii are configured and on the outer face (10) of the friction brake ring section (17) several radial friction elements (23, 25, 24) are formed, which are configured for radially pressing on the plug socket (27) so that after the pressing into contact then the azimuthal friction braking is generated.

2. The electrical plug (1) according to claim 1,
**characterized in that**
the friction brake device (15) intentionally is configured for direct mechanical contacting of the plug socket (27).

3. The electrical plug (1) according to claim 1 or 2,
**characterized in that**
the friction brake ring section (17), is mounted to be endlessly rotatable on the outer face (10).

4. The electrical plug (1) according to any one of the preceding claims,
**characterized in that**
on the outer face (10) of the first plug housing section (3) a groove (12) is formed, in which the friction brake ring section (17) is arranged and in which the friction brake ring section (17) is axially secured in the direction of the longitudinal axis (A).

5. The electrical plug (1) according to any one of the preceding claims,
**characterized in that**
the friction brake ring section (17) extends across an angle of between 300° and 355° around the longitudinal axis (A).

6. The electrical plug (1) according to any one of the preceding claims,
**characterized in that**
the friction brake ring section (17) is configured as a single piece and/or the friction brake ring section (17) is configured to be made from metal, in particular from stainless steel.

7. The electrical plug (1) according to any one of the preceding claims,
**characterized in that**
by the friction brake device (15) a defined torque threshold value of between 1Nm and 20Nm, in particular depending on the plug type of the electrical plug (1), is predetermined.

8. The electrical plug (1) according to any one of the preceding claims,
**characterized in that**
the plug housing (2) comprises a rotation stop device (43), by which a rotation angle of the plug (1) around the longitudinal axis (A) of the first plug housing section (3) is limited.

9. The electrical plug (1) according to any one of the preceding claims,
**characterized in that**
the electrical plug (1) comprises an axial holding device (19), by which an axial position is capable of being fixed in the direction of the longitudinal axis (A) of the first plug housing section (3) to the housing part (26), especially the axial holding device (19) comprises a separate securing ring (18), especially comprising crawl teeth (44) and retaining teeth (46), or a securing ring section (18), which is arranged on an outer face (10), in particular in a groove (9) on the outer face (10), of the first plug housing section (3) and projects radially beyond the outer face (10) of the first plug housing section (3), in particular the securing ring section (18) comprises an integrated snap element (32).

10. The electrical plug (1) according to any one of the preceding claims,
**characterized in that**
on an outer face (10) of the first plug housing section (3) a seal (20), which is separate from the friction brake device (15), is arranged.

11. An arrangement (29) comprising an electrical plug (1) according to any one of the preceding claims and comprising a housing part (26) of a housing for an electric motor, wherein the first plug housing section (3) is inserted into the plug socket (27) in the housing part (26) and by the friction brake device (15) a defined torque threshold value is predetermined so that after reaching the mounted axial end position of the electrical plug (1) an intentionally provided rotational movement possibility of the electrical plug (1) around the longitudinal axis (A) of the first plug housing section (3) is only facilitated upon exceeding the torque threshold value and the electrical plug (1) remains at the same axial level thereby.

12. An arrangement (29) according to claim 11,
**characterized in that**
the electrical plug (1) is axially retained by an axial holding device (19), which is separate from the friction brake device (15) and which comprises a securing ring section (18), wherein the securing ring section (18) radially engages behind a radial step (32) of the plug socket (27), or the axial holding device (19) comprises a securing bracket (38), which is arranged on the plug socket (27) and radially engages an engagement portion (40) in the first plug housing section (3).

13. A method for mounting an electrical plug (1) according to any one of the preceding claims 1 to 10 on a housing part (26) of a housing for an electric motor, the method comprising the following steps:
- manufacturing a plug socket (27) in the housing part (26) for receiving a first plug housing section (3) of the electrical plug (1);
- generating a friction brake device (15) on an outer face (10) of the first plug housing section (3),
- inserting the first plug housing section (3) with the friction brake device (15) into the plug socket (27) along a linear assembling direction (P), which is oriented parallel or coaxially to the longitudinal axis (A) of the first plug housing section (3);
- automatic generating of a radial pressing force of the friction brake device (15) on the inner surface (28) of the plug socket (27) whilst directly contacting the inner surface (28) by a radially larger friction brake part (16) of the friction brake device (15) and defined generating of a torque threshold value caused thereby for rotating the electrical plug (1) relative to the housing part (26) in the mounted final state of the electrical plug (1) on the housing part (26);
- reaching an axial end position of the first plug housing section (3) in the plug socket (27);
- securing the axial end position by an axial holding device (19) of the arrangement (29).

## Patentansprüche

1. Elektrischer Stecker (1) zum Verbinden mit einem Gehäuseteil (26), mit einem Steckergehäuse (2), das einen ersten Steckergehäuseabschnitt (3) mit einer Längsachse (A) umfasst,
wobei der erste Steckergehäuseabschnitt (3) absichtlich zum Einsetzen in eine Steckerbuchse (27) des Gehäuseteils (26) ausgestaltet ist und der elektrische Stecker (1) eine Reibungsbremsvorrichtung (15) mit einem Reibungsbremsteil (16) umfasst, wobei der Reibungsbremsteil (16) an einer Außenfläche (10) des ersten Steckergehäuseabschnitts (3) angeordnet ist und der Reibungsbremsteil (16) in Richtung der Außenseite in radialer Richtung zur Längsachse (A) freiliegt, wobei durch die Reibungsbremsvorrichtung (15) eine Reibungsbremswirkung in einer azimutal definierten Weise um die Längsachse (A) mit einem festgelegten Drehmomentschwellenwert für den elektrischen Stecker (1) erzeugt wird, **dadurch gekennzeichnet, dass**
die Reibungsbremsvorrichtung (15) einen Reibungsbremsringabschnitt (17) als Reibungsbremsteil (16) umfasst, der eine Komponente ist, die vom ersten Steckergehäuseabschnitt (3) separat ist, wobei der Reibungsbremsringabschnitt (17) so montiert ist, dass er an der Außenfläche (10) drehbar ist, wobei eine Außenfläche (10) des Reibungsbremsringabschnitts (17) uneben ist, so dass in mindestens zwei verschiedenen azimutalen Positionen der Außenfläche (10) verschiedene Radien ausgestaltet sind und an der Außenfläche (10) des Reibungsbremsringabschnitts (17) mehrere radiale Reibungselemente (23, 25, 24) ausgebildet sind, die zum radialen Pressen an die Steckerbuchse (27) ausgestaltet sind, so dass nach den Pressen in Kontakt dann das azimutale Reibungsbremsen erzeugt wird.

2. Elektrischer Stecker (1) nach Anspruch 1,
**dadurch gekennzeichnet, dass**
die Reibungsbremsvorrichtung (15) absichtlich für ein direktes mechanisches Kontaktieren der Steckerbuchse (27) ausgestaltet ist.

3. Elektrischer Stecker (1) nach Anspruch 1 oder 2,
**dadurch gekennzeichnet, dass**
der Reibungsbremsringabschnitt (17) so montiert ist, dass er an der Außenfläche (10) endlos drehbar ist.

4. Elektrischer Stecker (1) nach einem der vorangehenden Ansprüche,
**dadurch gekennzeichnet, dass**
an der Außenfläche (10) des ersten Steckergehäuseabschnitts (3) eine Nut (12) ausgebildet ist, in der der Reibungsbremsringabschnitt (17) angeordnet ist und in der der Reibungsbremsringabschnitt (17) in der Richtung der Längsachse (A) axial gesichert ist.

5. Elektrischer Stecker (1) nach einem der vorangehenden Ansprüche,
**dadurch gekennzeichnet, dass**
der Reibungsbremsringabschnitt (17) sich über einen Winkel zwischen 300° und 355° um die Längsachse (A) erstreckt.

6. Elektrischer Stecker (1) nach einem der vorangehenden Ansprüche,
**dadurch gekennzeichnet, dass**
der Reibungsbremsringabschnitt (17) als einzelnes Stück ausgestaltet ist und/oder der Reibungsbremsringabschnitt (17) so ausgestaltet ist, dass er aus Metall, insbesondere aus Edelstahl, besteht.

7. Elektrischer Stecker (1) nach einem der vorangehenden Ansprüche,
**dadurch gekennzeichnet, dass**
durch die Reibungsbremsvorrichtung (15) ein definierter Drehmomentschwellenwert zwischen 1 Nm und 20 Nm, insbesondere in Abhängigkeit von dem Steckertyp des elektrischen Steckers (1), vorbestimmt wird.

8. Elektrischer Stecker (1) nach einem der vorangehenden Ansprüche,
**dadurch gekennzeichnet, dass**
das Steckergehäuse (2) eine Drehstoppvorrichtung (43) umfasst, durch die ein Drehwinkel des Steckers (1) um die Längsachse (A) des ersten Steckergehäuseabschnitts (3) begrenzt wird.

9. Elektrischer Stecker (1) nach einem der vorangehenden Ansprüche,
**dadurch gekennzeichnet, dass**
der elektrische Stecker (1) eine axiale Haltevorrichtung (19) umfasst, durch die eine axiale Position in der Richtung der Längsachse (A) des ersten Steckergehäuseabschnitts (3) zum Gehäuseteil (26) fixiert werden kann, insbesondere die axiale Haltevorrichtung (19) einen separaten Sicherungsring (18), insbesondere mit Kriechzähnen (44) und Haltezähnen (46), oder einen Sicherungsringabschnitt (18), der an einer Außenfläche (10), insbesondere in einer Nut (9) an der Außenfläche (10), des ersten Steckergehäuseabschnitts (3) angeordnet ist und radial über die Außenfläche (10) des ersten Steckergehäuseabschnitts (3) vorsteht, umfasst, insbesondere der Sicherungsringabschnitt (18) ein integriertes Schnappelement (32) umfasst.

10. Elektrischer Stecker (1) nach einem der vorangehenden Ansprüche,
**dadurch gekennzeichnet, dass**
an einer Außenfläche (10) des ersten Steckergehäuseabschnitts (3) eine Dichtung (20), die von der Reibungsbremsvorrichtung (15) separat ist, angeordnet ist.

11. Anordnung (29) mit einem elektrischen Stecker (1) nach einem der vorangehenden Ansprüche und mit einem Gehäuseteil (26) eines Gehäuses für einen Elektromotor, wobei der erste Steckergehäuseabschnitt (3) in die Steckerbuchse (27) im Gehäuseteil (26) eingesetzt wird und durch die Reibungsbremsvorrichtung (15) ein definierter Drehmomentschwellenwert so vorbestimmt wird, dass nach dem Erreichen der montierten axialen Endposition des elektrischen Steckers (1) eine absichtlich bereitgestellte Drehbewegungsmöglichkeit des elektrischen Steckers (1) um die Längsachse (A) des ersten Steckergehäuseabschnitts (3) nur beim Überschreiten des Drehmomentschwellenwerts erleichtert wird, und der elektrische Stecker (1) dadurch auf derselben axialen Höhe bleibt.

12. Anordnung (29) nach Anspruch 11,
**dadurch gekennzeichnet, dass**
der elektrische Stecker (1) durch eine axiale Haltevorrichtung (19) axial gehalten wird, die von der Reibungsbremsvorrichtung (15) separat ist und die einen Sicherungsringabschnitt (18) umfasst, wobei der Sicherungsringabschnitt (18) hinter einer radialen Stufe (32) der Steckerbuchse (27) radial in Eingriff kommt, oder die axiale Haltevorrichtung (19) einen Sicherungsbügel (38) umfasst, der an der Steckerbuchse (27) angeordnet ist und mit einem Eingriffsabschnitt (40) im ersten Steckergehäuseabschnitt (3) radial in Eingriff kommt.

13. Verfahren zum Montieren eines elektrischen Steckers (1) nach einem der vorangehenden Ansprüche 1 bis 10 an einem Gehäuseteil (26) eines Gehäuses für einen Elektromotor, wobei das Verfahren die folgenden Schritte umfasst:
- Herstellen einer Steckerbuchse (27) im Gehäuseteil (26) zum Aufnehmen eines ersten Steckergehäuseabschnitts (3) des elektrischen Steckers (1);
- Erzeugen einer Reibungsbremsvorrichtung (15) an einer Außenfläche (10) des ersten Steckergehäuseabschnitts (3),
- Einsetzen des ersten Steckergehäuseabschnitts (3) mit der Reibungsbremsvorrichtung (15) in die Steckerbuchse (27) entlang einer linearen Montagerichtung (P), die parallel oder koaxial zur Längsachse (A) des ersten Steckergehäuseabschnitts (3) orientiert ist;
- automatisches Erzeugen einer radialen Presskraft der Reibungsbremsvorrichtung (15) an der inneren Oberfläche (28) der Steckerbuchse (27), während die innere Oberfläche (28) direkt durch einen radial größeren Reibungsbremsteil (16) der Reibungsbremsvorrichtung (15) kontaktiert wird und ein dadurch verursachter Drehmomentschwellenwert zum Drehen des elektrischen Steckers (1) relativ zum Gehäuseteil (26) im montierten Endzustand des elektrischen Steckers (1) am Gehäuseteil (26) definiert erzeugt wird;
- Erreichen einer axialen Endposition des ersten Steckergehäuseabschnitts (3) in der Steckerbuchse (27);
- Sichern der axialen Endposition durch eine axiale Haltevorrichtung (19) der Anordnung (29).

## Revendications

1. Prise électrique (1) destinée à un raccordement à une partie de boîtier (26), comportant un boîtier de prise (2), qui comporte une première section de boîtier de prise (3) ayant un axe longitudinal (A),
la première section de boîtier de prise (3) étant intentionnellement configurée pour une insertion dans une douille de prise (27) de la partie de boîtier (26) et la prise électrique (1) comportant un dispositif de frein à friction (15) comportant une partie de frein à friction (16), ladite partie de frein à friction (16) étant agencée sur une face extérieure (10) de la première section de boîtier de prise (3) et ladite partie de frein à friction (16) étant exposée vers l'extérieur dans une direction radiale par rapport à l'axe longitudinal (A), un freinage par friction agissant d'une manière définie en azimut autour de l'axe longitudinal (A) avec une valeur de seuil de couple définie pour la prise électrique (1), étant généré par le dispositif de frein à friction (15),
**caractérisée en ce que**
le dispositif de frein à friction (15) comporte une section de bague de frein à friction (17) en tant que partie de frein à friction (16), qui est un composant qui est séparé de la première section de boîtier de prise (3), la section de bague de frein à friction (17) étant montée de façon à pouvoir tourner sur la face extérieure (10), une face extérieure (10) de la section de bague de frein à friction (17) étant irrégulière de sorte que dans au moins deux positions azimutales différentes de la face extérieure (10), différents rayons sont configurés et sur la face extérieure (10) de la section de bague de frein à friction (17) sont formés plusieurs éléments de friction radiaux (23, 25, 24) qui sont configurés pour presser radialement sur la douille de prise (27) de sorte qu'après le contact par pression, le freinage par friction azimutal est alors généré.

2. Prise électrique (1) selon la revendication 1,
**caractérisée en ce que**
le dispositif de frein à friction (15) est intentionnellement configuré pour un contact mécanique direct de la douille de prise (27).

3. Prise électrique (1) selon la revendication 1 ou 2,
**caractérisée en ce que**
la section de bague de frein à friction (17) est montée pour pouvoir tourner en continu sur la face extérieure (10).

4. Prise électrique (1) selon l'une quelconque des revendications précédentes,
**caractérisée en ce que**
sur la face extérieure (10) de la première section de boîtier de prise (3) est formée une gorge (12) dans laquelle la section de bague de frein à friction (17) est agencée et dans laquelle la section de bague de frein à friction (17) est fixée axialement dans la direction de l'axe longitudinal (A).

5. Prise électrique (1) selon l'une quelconque des revendications précédentes,
**caractérisée en ce que**
la section de bague de frein à friction (17) s'étend sur un angle compris entre 300° et 355° autour de l'axe longitudinal (A).

6. Prise électrique (1) selon l'une quelconque des revendications précédentes,
**caractérisée en ce que**
la section de bague de frein à friction (17) est configurée comme une seule pièce et/ou la section de bague de frein à friction (17) est configurée pour être fabriquée à partir d'un métal, en particulier à partir d'un acier inoxydable.

7. Prise électrique (1) selon l'une quelconque des revendications précédentes,
**caractérisée en ce que**
par le dispositif de frein à friction (15), une valeur de seuil de couple définie comprise entre 1 Nm et 20 Nm, en particulier en fonction du type de prise de la prise électrique (1), est prédéterminée.

8. Prise électrique (1) selon l'une quelconque des revendications précédentes,
**caractérisée en ce que**
le boîtier de prise (2) comporte un dispositif d'arrêt de rotation (43), par lequel un angle de rotation de la prise (1) autour de l'axe longitudinal (A) de la première section de boîtier de prise (3) est limité.

9. Prise électrique (1) selon l'une quelconque des revendications précédentes,
**caractérisée en ce que**
la prise électrique (1) comporte un dispositif de maintien axial (19), par lequel une position axiale peut être fixée dans la direction de l'axe longitudinal (A) de la première section de boîtier de prise (3) à la partie de boîtier (26), en particulier le dispositif de maintien axial (19) comporte une bague de fixation séparée (18), comportant en particulier des dents de rampement (44) et des dents de retenue (46), ou une section annuaire de fixation(18), qui est agencée sur une face extérieure (10), en particulier dans une gorge (9) sur la face extérieure (10), de la première section de boîtier de prise (3) et fait saillie radialement au-delà de la face extérieure (10) de la première section de boîtier de prise (3), en particulier la section de bague de fixation (18) comporte un élément d'encliquetage intégré (32).

10. Prise électrique (1) selon l'une quelconque des revendications précédentes,
**caractérisée en ce que**
sur une face extérieure (10) de la section de boîtier de prise (3) est agencé un joint (20), qui est séparé du dispositif de frein à friction (15).

11. Agencement (29) comportant une prise électrique (1) selon l'une quelconque des revendications précédentes et comportant une partie de boîtier (26) d'un boîtier pour un moteur électrique, dans lequel la première section de boîtier de prise (3) est insérée dans la douille de prise (27) dans la partie de boîtier (26) et par le dispositif de frein à friction (15), une valeur de seuil de couple définie est prédéterminée de sorte qu'après avoir atteint la position d'extrémité axiale montée de la prise électrique (1), une possibilité de mouvement de rotation intentionnellement prévue de la prise électrique (1) autour de l'axe longitudinal (A) de la première section de boîtier de prise (3) est uniquement facilitée lorsque la valeur de seuil de couple est dépassée et la prise électrique (1) reste ainsi au même niveau axial.

12. Agencement (29) selon la revendication 11,
**caractérisé en ce que**
la prise électrique (1) est axialement retenue par un dispositif de maintien axial (19), qui est séparé du dispositif de frein à friction (15) et qui comporte une section de bague de fixation (18), la section de bague de fixation (18) venant radialement en prise derrière un gradin radial (32) de la douille de prise (27), ou le dispositif de maintien axial (19) comportant un support de fixation (38), qui est agencé sur la douille de prise (27) et met radialement en prise une portion de prise (40) dans la première section de boîtier de prise (3).

13. Procédé pour monter une prise électrique (1) selon l'une quelconque des revendications 1 à 10 précédentes sur une partie de boîtier (26) d'un boîtier pour un moteur électrique, le procédé comportant les étapes suivantes :
- fabriquer une douille de prise (27) dans la partie de boîtier (26) pour recevoir une première section de boîtier de prise (3) de la prise électrique (1) ;
- générer un dispositif de frein à friction (15) sur une face extérieure (10) de la première section de boîtier de prise (3),
- insérer la première section de boîtier de prise (3) avec le dispositif de frein à friction (15) dans la douille de prise (27) le long d'une direction d'assemblage linéaire (P), qui est orientée parallèlement ou coaxialement à l'axe longitudinal (A) de la première section de boîtier de prise (3) ;
- générer automatiquement une force de pression radiale du dispositif de frein à friction (15) sur la surface intérieure (28) de la douille de prise (27) tout en venant directement en contact avec la surface intérieure (28) par une partie de frein à friction radialement plus grande (16) du dispositif de frein à friction (15) et générer une valeur de seuil de couple définie ainsi générée pour faire tourner la prise électrique (1) par rapport à la partie de boîtier (26) à l'état final monté de la prise électrique (1) sur la partie de boîtier (26) ;
- atteindre une position d'extrémité axiale de la première section de boîtier de prise (3) dans la douille de prise (27) ;
- fixer la position d'extrémité axiale par un dispositif de maintien axial (19) de l'agencement (29).
